# EUROPEAN PATENT APPLICATION

(11) **EP 1 367 110 A1**
(43) Date of publication of application: **03.12.2003**
(21) Application number: 03012110.7
(22) Date of filing: 28.05.2003
(51) Int. Cl.: C09J 175/04, C09J 131/04, C08G 18/08, C08G 18/40, C08G 18/62

(54) **Adhesive composition**

(30) Priority: 31.05.2002 JP 2002159930
(71) Applicant: National Starch and Chemical Investment Holding Corporation, New Castle, Delaware 19720 (US)
(72) Inventor: Yamauchi, Masaru, Osaka 561-0031 (JP); Tawada, Hideki, Osaka 681-0861 (JP)
(74) Representative: Held, Stephan, Dipl.-Chem. Dr.rer.nat.

(57) **Abstract**

Adhesive compositions in regard to which environmental problems and impact on the human body are taken into consideration, and in which at least one characteristic selected from storage stability, adhesiveness, adhesion, heat resistance, hot-water resistance, and desiccative properties-with respect to various substrates-is enhanced compared to conventional adhesive compositions are realized. The adhesive composition is composed of a main ingredient in an emulsified state, constituted from a polymer emulsion that contains a polyol having two or more hydroxyl groups that can react with isocyanate groups, and of a hardener that contains a polyisocyanate compound. In the adhesive composition the weight-average molecular weight (M_{w}) of the polyol is 400 to 8000, measured by GPC.

## Description

### BACKGROUND OF THE INVENTION

### Technical Field

The present invention relates to adhesive compositions; it relates in particular to aqueous adhesive compositions used as an adhesive between decorative sheets and substrates.

### Description of the Related Art

"Decorative laminates" have been widely used to date as components of buildings and as components of furniture. Now in the present specification, a "decorative laminate" means a material in which a so-called *decorative sheet* that is a plastic sheet, decorative paper, or the like is adhered onto the surface of a *substrate* consisting of a base material selected from wood base materials (for example, plywood, particleboard, wood-fiberboard, etc.), as well as inorganic base materials (for example cement-board, plasterboard, etc.), and is not particularly limited, as long as it is something employed as an ordinary decorative laminate.

Routinely, adhesives whose chief component is an emulsion of vinyl acetate resins―such as a vinyl acetate resin emulsion, an ethylene-vinyl acetate copolymer resin emulsion, or an acrylate-vinyl acetate copolymer resin emulsion―are used in bonding decorative sheets and substrates.

Nevertheless, the problem with these above-noted adhesives in which the principal component is an emulsion of vinyl acetate resins is that several of their material properties, such as adhesion, heat resistance, and water resistance, are inadequate. With cases moreover in which a decorative sheet is pasted onto a substrate by means of one of the adhesives just mentioned, the problem is that due to high-to-low changes in temperature (ambient temperature), or due to changes in the surrounding environment-such as being splashed with water or being left in a high-humidity atmosphere―the decorative sheet sometimes lifts off from the substrate, which mars the outward appearance of the decorative laminate. For this reason, in recent years investigations into improving the adhesion between substrates and decorative sheets have been made, one example of which has been the study of adhesives containing urethane resin emulsions.

An adhesive composition that has among its polymer backbones polyester and polyether backbones, and also in which a main ingredient being a combination of a urethane resin emulsion having acid groups and an ethylene-vinyl acetate copolymer emulsion is compounded with a hardener being a combination of polyisocyanate compounds, is disclosed in Japanese Pub. Pat. App. No. H10-140126.

In Japanese Pub. Pat. App. No. H11-209722, an adhesive composition made up of an ethylene-vinyl acetate copolymer emulsion and an urethane resin emulsion, as well as at least one intermediate being dimethyl adipate, dimethyl succinate or dimethyl glutarate is disclosed.

An adhesive composition which is composed of a vinyl ester (co)polymer emulsion (containing an ethylene-vinyl acetate copolymer emulsion), a Substance A (main ingredient) containing an anionic urethane resin emulsion and polyvinyl alcohol, and a Substance B (hardener) containing polyisocyanate compounds, and further which contains organic solvents such as toluene for adjusting the viscosity and enhancing the film-forming properties, is disclosed in Japanese Pub. Pat. App. No. 2000-186266.

Every one of the foregoing adhesive compositions disclosed in the Japanese patent gazette is an adhesive composition in which a urethane resin emulsion and an ethylene-vinyl acetate copolymer emulsion are combined. In the first place, the problem with cases in which these two resin emulsions are compounded is that the compound stability and the storage stability of the resin emulsion obtained will not necessarily be adequate, and moreover, that special compounding techniques are required in order to gain sufficient compound and storage stability.

What is more, the adhesive compositions disclosed in Japanese Pub. Pat. App. No. H11-209722 and in Pub. Pat. App. No. 2000-186266 contain organic solvents. While incorporating organic solvents can enhance the film-forming properties of the adhesive compositions and the flexibility of the cured product, there are problems in that when organic solvents are present in an adhesive composition, the heat and water resistance of the cured product of the adhesive composition deteriorate, and in that the organic solvents migrate into and erode the substrate and decorative sheet forming a manufactured decorative laminate, which can have a harmful effect on the substrate and decorative sheet.

The VOC (volatile organic compound) toluene is contained in the adhesive composition disclosed in Japanese Pub. Pat. App. No. 2000-186266. Toluene is thought to be a causative factor behind sick-house syndrome; and taking the handling of environmental problems and the influences on the human body into consideration, using organic-solvent-containing adhesive compositions in the manufacture of building construction and furniture materials is undesirable.

It will be appreciated that in the adhesive composition disclosed in Japanese Pub. Pat. App. No. 2000-186266, polyvinyl alcohol is contained in Substance A (the main ingredient), in order to enhance the heat and water resistance of the cured product. The problems, though, are that the inclusion of polyvinyl alcohol weakens the hot-water resistance of the cured adhesive composition product and, inasmuch as the water solubility of polyvinyl alcohol is extremely high, can degrade the desiccative properties of the adhesive composition. The inclusion of polyvinyl alcohol tends to have a negative effect especially on adhesion onto plastic sheets as the decorative sheet.

Thought thus is being given to handling the environmental issue and to the impact on the human body, and meanwhile adhesive compositions exhibiting superior performance (e.g., compound and storage stability, desiccative and adhesiveness, adhesion, and heat and hot-water resistance) on various substrates are being sought.

### BRIEF SUMMARY OF THE INVENTION

The present invention, brought about in order to resolve such issues, realizes adhesive compositions in regard to which those issues―environmental problems and impact on the human body―are taken into consideration, and in which at least one characteristic selected from storage stability, adhesiveness, adhesion, heat resistance, hot-water resistance, and desiccative properties―with respect to various substrates―is enhanced compared to conventional adhesive compositions. The present invention in particular realizes adhesive compositions favorable for bonding decorative sheet with substrates.

The present inventors, as the cumulative result of concerted research, discovered that in an adhesive composition composed of a main ingredient in an emulsified state, constituted from a polymer emulsion, and of a hardener containing a polyisocyanate compound, by adding a polyol whose weight-average molecular weight (M_{w}) measured by gel permeation chromatography (GPC) is 400 to 8000 to the polymer emulsion included in the main ingredient, the foregoing issues were resolved, and thus brought the present invention to its completion.

In particular, the present invention in one aspect realizes a new adhesive composition, being an adhesive composition composed of a main ingredient in an emulsified state, constituted from a polymer emulsion that contains a polyol having two or more hydroxyl groups that can react with isocyanate groups, and of a hardener that contains a polyisocyanate compound, the adhesive composition characterized in that the weight-average molecular weight (M_{w}) measured by gel permeation chromatography (GPC) of the aforementioned polyol is 400 to 8000. This adhesive composition may be utilized especially suitably for manufacturing decorative laminates by bonding decorative sheets to substrates.

As will be described in detail below, the present invention, by the addition of a specific polyol whose weight-average molecular weight (M_{w}) measured by gel permeation chromatography (GPC) is 400 to 8000, to a main ingredient in an emulsified state containing a polymer emulsion, endeavors to resolve the foregoing issues. The polyol has a plasticizing effect on the polymer in the polymer emulsion (or meanwhile can function as a plasticizer).

Initially, before the adhesive composition cures, at least a portion of the polyol is admixed (blended or mixed) into the polymer in the polymer emulsion included in the main ingredient, which presumably works on the polymer as a kind of plasticizer and appears to impart outstanding effectiveness in enhancing the film-forming properties of the adhesive composition and the flexibility of a cured product thereof.

As far as the polyol is concerned, furthermore, because it is the more preferable that the main ingredient constituted from a polymer emulsion that includes the polyol is able to be a main ingredient in an emulsified state whose compound stability and storage stability are satisfactory without using a pH-adjusting compounding technique, it is especially preferable that the polyol, mixed into the polymer emulsion, sustains the emulsion state of the main ingredient, whereby the emulsified form will not break down.

When a hardener containing a polyisocyanate compound and a main ingredient in an emulsified state containing a polymer emulsion that includes a polyol are mixed, due to the reaction of the polyol―at least a portion of which is admixed (blended or mixed) into the polymer in the polymer emulsion included in the main ingredient―with the polyisocyanate compound, the creation of urethane resin begins within the adhesive composition in which the main ingredient and the hardener have been mixed. Inasmuch as at least a portion of the urethane resin generated in this case is present within (admixed or blended into) the polymer-emulsion polymer, with regard to the states in which the urethane resin and the polymer exist, the polymer emulsion and the separately added urethane resin emulsion can be said to be urethane resins that essentially differ.

The fact that a urethane resin is created imparts superior adhesion to an adhesive composition having to do with the present invention, even on substrates onto which bonding with conventional aqueous adhesives has been problematic, and also makes it possible to produce an adhesive composition whose heat resistance and hot-water resistance are outstanding.

It should here be understood that this means that the urethane polymer created by the reaction of a polyol and an isocyanate compound demonstrates the adhesion, with respect to all sorts of objects to be glued, which had been secured by mixing conventional urethane resin emulsions, and also that initial adhesion can be enhanced since at least a portion of the polyol is present within the polymer-emulsion polymer.

Likewise, inasmuch as both the polyol and an isocyanate compound are consumed as the urethane resin is created, the present invention can present adhesive compositions superior from an environmental aspect, and from the aspect of impact on the human body.

It should also be understood that in the present invention, the polyol able to function as a plasticizer does not remain as it is within the cured product of the adhesive composition, but is converted into a high molecular weight form by reacting with the hardener which therefore, distinct from the utilization simply of plasticizers, provides for sustained heat resistance in the cured product.

From the following detailed description in conjunction with the accompanying drawings, the foregoing and other objects, features, aspects and advantages of the present invention will become readily apparent to those skilled in the art.

### DETAILED DESCRIPTION OF THE INVENTION

In the present invention, "main ingredient" means a chief substance in an emulsified state, containing a polymer emulsion and a specific polyol; and is not particularly limited, as long as it allows an adhesive composition that is the object of the present invention to be obtained.

In the present invention, "polymer emulsion" is what would be an ordinary polymer emulsion, in which the polymer particles, which have been converted into high molecular weight form in a solvent by a process such as emulsion polymerization or pressure emulsification, are stably present; insofar as it allows an adhesive composition that is the object of the present invention to be obtained, the polymer emulsion is not particularly limited.

The "polymer emulsion" in the present invention is preferably at least one type of emulsion selected from ethylene-vinyl acetate copolymer emulsions, synthetic rubber emulsions, and acrylic resin emulsions.

Illustrative of an "ethylene-vinyl acetate copolymer emulsion" would be for example at least one type of emulsion selected from the group consisting of ethylene-vinyl acetate copolymer emulsions, ethylene-vinyl acetate-vinyl chloride copolymer emulsions, and ethylene-vinyl acetate-acryl copolymer emulsions.

Illustrative of a "synthetic rubber emulsion" would be for example at least one type of emulsion selected from the group consisting of styrene-butadiene copolymer emulsions, polybutadiene emulsions, butadiene-acrylonitrile copolymer emulsions, butadiene-methyl methacrylate copolymer emulsions, butadiene-styrene-vinyl pyridine copolymer emulsions, polychloroprene emulsions, and polyisoprene emulsions.

Illustrative of an "acrylic resin emulsion" would be for example at least one type of emulsion selected from emulsions of acrylic resins in which at least one monomer selected from acrylate, methacrylate, acrylate ester, methacrylate ester, acrylonitrile, acyrlamide, and functional methacrylate ester, is polymerized; as well as emulsions of acrylic resins in which the at least one monomer and styrene are copolymerized.

This means that included by "acrylic resin emulsions" are, in addition to emulsions of acrylic resins in which at least one monomer selected from acrylate, methacrylate, acrylate ester, methacrylate ester, acrylonitrile, acyrlamide, and functional methacrylate ester is (co)polymerized, emulsions of acrylic-styrene copolymers in which at least one monomer selected from acrylate, methacrylate, acrylate ester, methacrylate ester, acrylonitrile, acyrlamide, and functional methacrylate ester is copolymerized with styrene.

Illustrative of an "acrylate ester" would be for example methyl acrylate, ethyl acrylate, n-butyl acrylate, isobutyl acrylate, t-butyl acrylate, 2-ethylhexyl acrylate, lauryl acrylate, and octadecyl acrylate.

Illustrative of a "methlyacrylate ester" would be for example methyl methacrylate, ethyl methacrylate, n-butyl methacrylate, isobutyl methacrylate, t-butyl methacrylate, 2-ethylhexyl methacrylate, lauryl methacrylate, and octadecyl methacrylate.

Illustrative of a "functional methlyacrylate ester" would be for example 2-hydroxyethyl methacrylate, 2-hydroxypropyl methacrylate, (dimethylamino)ethyl methacrylate, (t-butylamino)ethyl methacrylate, (diethylamino)ethyl methacrylate, and glycidyl methacrylate.

Furthermore, "functional acrylate esters" such as 2-hydroxyethyl acrylate, 2-hydroxypropyl acrylate, (dimethylamino)ethyl acrylate, (t-butylamino)ethyl acrylate, (diethylamino)ethyl acrylate, and glycidyl acrylate may also be employed.

A commercial product may be used as the "polymer emulsion"; the following would for example be illustrative:
as an ethylene-vinyl acetate copolymer emulsion, "Denka EVA-Tex #81" (product name; 56 weight % solid-portion concentration, pH 4.5-6.0), manufactured by Denki Kagaku Kogyo Co.; and
as a styrene-butadiene copolymer latex, "Nipol LX 426" (product name; 50 weight % solid-portion concentration, pH 8.5), manufactured by Nippon Zeon Corp.

The "polymer emulsion" may be used singly or in combination.

The "polyol" has two or more hydroxyl groups that can react with polyisocyanate groups, is 400 to 8000 weight-average molecular weight (M_{w}) measured by gel permeation chromatography (GPC), and is not particularly limited as long as it enables an adhesive composition that is the object of the present invention to be produced. Polyvinyl alcohol and modified polyvinyl alcohol are excluded, however.

The polyol being that which, mixed with the polymer emulsion included in the main ingredient, can maintain the emulsified state is more preferable.

Additionally, particularly preferable is that at least a portion of the "polyol" be admixed (blended or mixed) with the polymer of the polymer emulsion included in the main ingredient.

Illustrative of a "polyol" would be for example at least one selected from polyester polyols, polyolefin-based polyols, polyolic xylene resins, polybutadiene-based polyols, polyether polyols, acrylic polyols, and castor-oil derivatives.

Illustrative of a "polyester polyol" would be, to give specific examples:
dicarbonic acids such as adipic acid, sebacic acid, itaconic acid, maleic (acid) anhydride, terephthalic acid, isophthalic acid, fumaric acid, succinic acid, oxalic acid, malonic acid, glutaric acid, pimelic acid, suberic acid, and azelaic acid; polyester polyols selected from polyol compounds such as ethylene glycol, diethylene glycol, propylene glycol, 1,4-butanediol, 1,6-hexanediol, neopentyl glycol, 1,2-propanediol, 1,3-propanediol, 1,9-nonanediol, 3-methyl-1,5-pentanediol, tripropylene glycol, trimethylolpropane, and glycerol; as well as polylactone polyester polyols such as polycaprolactone polyols and (poly)β-methyl-α-valerolactone.

Illustrative of "polyolefin-based polyols" would be, for example, (poly)hydroxy polymers.

Illustrative of "polyolic xylene resins" would be, for example, modified polyol analogues of xylene resins.

Illustrative of "polybutadiene-based polyols" would be, for example: polyols consisting of homopolymers having polybutadiene backbones (1,2 adducts and 1,4 adducts); polyols consisting of polybutadiene copolymers in which butadiene, and styrene and acrylonitrile are copolymerized; as well as hydrogenated analogues of these.

Illustrative of "polyether polyols" would be, for example, polyethylene glycol, polypropylene glycol, polytetramethylene ether glycol, amino-modified polypropylene glycol, and ester-modified polypropylene glycol.

Illustrative of "acrylic polyols" would be, for example, acrylic polyols, polyacrylate ester polyols, and polymethacrylate ester polyols obtained by copolymerizing acrylic monomers such as hydroxyethyl methacrylate (HEMA) with acrylate esters, methacrylate esters, and styrene.

Illustrative of "castor-oil derivatives" would be, for example, refined castor oil, dehydrated castor oil, polymerized dehydrated castor oil, and castor-oil polyols.

Again, the weight-average molecular weight (M_{w}) measured by gel permeation chromatography (GPC) of the polyol is 400 to 8000.

"Weight-average molecular weight (M_{w})" in the present invention means weight-average molecular weight measured utilizing GPC and converted with monodisperse molecular-weight polystyrene. More specifically, it means a value measure utilizing the GPC device and measuring method described below―the present inventors utilized the device and measuring method described below in the embodiments and comparative examples to be described later.

The "600E" manufactured by Waters Co. was used for the GPC device, and the "Waters 410 RI Detector" and the "Waters 486 UV Detector" (220 nm) were used as detectors. An "Ultra-Styragel 100 Å" column (for molecular weights of 50 to 1500) and an "Ultra-Styragel 500 Å" column (for molecular weights of 1000 to 10,000)―two columns total―manufactured by Waters Co., were used as the GPC columns. Samples were dissolved in tetrahydrofuran and flowed at a flow speed of 0.5 ml/min and a column temperature of 40°C, and their M_{w} was found by performing molecular-weight conversions using a calibration curve for which polystyrene at monodisperse molecular weight (molecular weights of 1300, 3000 and 10,000) was the standard substance.

The weight-average molecular weight of the polyester polyols preferably is 500 to 6000; the weight-average molecular weight of the polyolefin-based polyols preferably is 500 to 6000; the weight-average molecular weight of the polyolic xylene resins preferably is 400 to 2000; the weight-average molecular weight of the polybutadiene-based polyols preferably is 1000 to 6000; the weight-average molecular weight of the polyether polyols preferably is 400 to 8000; the weight-average molecular weight of the acrylic polyols preferably is 500 to 6000; and the weight-average molecular weight of the castor-oil derivatives preferably is 500 to 6000.

The weight-average molecular weight of the polyester polyols more preferably is 500 to 3000; the weight-average molecular weight of the polyolefin-based polyols more preferably is 500 to 3000; the weight-average molecular weight of the polyolic xylene resins more preferably is 400 to 1000; the weight-average molecular weight of the polybutadiene-based polyols more preferably is 1000 to 3000; the weight-average molecular weight of the polyether polyols more preferably is 400 to 4000; the weight-average molecular weight of the acrylic polyols more preferably is 500 to 3000; and the weight-average molecular weight of the castor-oil derivatives more preferably is 1000 to 3000.

The weight-average molecular weight of the polyester polyols especially preferably is 1000 to 2000; the weight-average molecular weight of the polyolefin-based polyols especially preferably is 1000 to 2000; the weight-average molecular weight of the polyolic xylene resins especially preferably is 500 to 750; the weight-average molecular weight of the polybutadiene-based polyols especially preferably is 1000 to 2000; the weight-average molecular weight of the polyether polyols especially preferably is 1000 to 4000; the weight-average molecular weight of the acrylic polyols especially preferably is 1000 to 2000; and the weight-average molecular weight of the castor-oil derivatives especially preferably is 1000 to 2000.

If the weight-average molecular weight of the polyester polyols is less than 500, or if the weight-average molecular weight of the polyolefin-based polyols is less than 500, or if the weight-average molecular weight of the polyolic xylene resins is less than 400, or if the weight-average molecular weight of the polybutadiene-based polyols is less than 1000, or if the weight-average molecular weight of the polyether polyols is less than 400, or if the weight-average molecular weight of the acrylic polyols is less than 500, or if the weight-average molecular weight of the castor-oil derivatives is less than 500, then the adhesive performance (adhesion, heat and hot-water resistance) of the adhesive composition produced is liable to be inadequate.

If the weight-average molecular weight of the polyester polyols exceeds 6000, or if the weight-average molecular weight of the polyolefin-based polyols exceeds 6000, or if the weight-average molecular weight of the polyolic xylene resins exceeds 2000, or if the weight-average molecular weight of the polybutadiene-based polyols exceeds 6000, or if the weight-average molecular weight of the polyether polyols exceeds 8000, or if the weight-average molecular weight of the acrylic polyols exceeds 6000, or if the weight-average molecular weight of the castor-oil derivatives exceeds 6000, then the polyol might not demonstrate adequate plasticizing effects on the polymer emulsion; moreover, the emulsion state of the polymer emulsion would likely break down in mixing the polyol into the main ingredient. Consequently, stably mixing the polyol and polymer emulsion tends to be problematic.

A commercial product may be used as the "polyol"; the following would for example be illustrative:
- as a polyester polyol, "Polylite ODX 2376" (product name; hydroxyl value 107 to 118 mg KOH/g, weight-average molecular weight 1000), manufactured by Dainippon Ink and Chemicals, Inc.;
- as a polyether-based polyol, "Actcall 4000" (product name; weight-average molecular weight 4000), which is a polypropylene glycol, manufactured by Mitsui Takeda Chemicals, Inc.;
- as a polyolic xylene resin, "Nicanol K100" (product name; hydroxyl value 110 mg KOH/g, weight-average molecular weight 500), manufactured by Mitsubishi Gas Chemical Co., Inc.; and
- as a polyether polyol, "Hiprox BG 2000" (product name; hydroxyl value 56 mg KOH/g, weight-average molecular weight 2000), which is a polybutylene glycol, manufactured by Dainippon Ink and Chemicals, Inc.

The "polyol" may be used singly or in combination.

The polymer emulsions described above are used appropriately combined with the abovementioned polyols. Preferable combinations of polymer emulsion and polyol are exemplified below.

Preferably, the polymer emulsion is an ethylene-vinyl acetate copolymer resin emulsion and/or a synthetic rubber emulsion, and the polyol is a polyester polyol whose weight-average molecular weight is 500 to 6000.

Preferably, the polymer emulsion is an ethylene-vinyl acetate copolymer resin emulsion, and the polyol is a polyolic xylene resin whose weight-average molecular weight is 400 to 2000.

Preferably, the polymer emulsion is an ethylene-vinyl acetate copolymer resin emulsion, and the polyol is a polyether polyol whose weight-average molecular weight is 400 to 8000.

The relative weight of the polymer emulsion and polyol (polymer emulsion/polyol) is preferably 100/0.1 to 100/50; more preferably, 100/0.1 to 100/40; especially preferably 100/1 to 100/30. It should be understood that in the present specification, the "weight" of the polymer emulsion and polyol means the part (referred to as "solid portion" hereinafter) excepting the solvent (medium).

"Hardeners" in the present invention are hardening agents that include *polyisocyanate compounds* and, to the extent that they can yield an adhesive composition that is the object of the present invention, are not particularly limited.

"Polyisocyanate compounds" in the present invention, being organic compounds within whose molecules are at least two isocyanate groups, demonstratively function as hardeners that react with the polyols; and to the extent that they can yield an adhesive composition that is the object of the present invention, are not particularly limited.

Illustrative of "polyisocyanate compounds" would be, for example, the following compounds.
Aliphatic diisocyanate compounds such as: 1,6-hexamethylene diisocyanate; 3-isocyanate-methyl-3,5,5-trimethyl cyclohexyl isocyanate (isophorone diisocyanate); 1,4-tetramethylene diisocyanate; 2,4,4-trimethyl hexamethylene diisocyanate; 2,2,4-trimethyl hexamethylene diisocyanate; dicyclohexylmethane-4,4'-diisocyanate; methylcyclohexyl-2,4-diisocyanate; methylcyclohexyl-2,6-diisocyanate; xylylene diisocyanate; 1,3-bis(isocyanate) methylcyclohexane; tetramethyl xylylene diisocyanate; transcyclohexane-1,4-diisocyanate; and lysine diisocyanate.

Aromatic diisocyanate compounds such as: 2,4-toluene diisocyanate; 2,6-toluene diisocyanate; diphenyl methane-4,4'-isocyanate; 1,5'-naphthene diisocyanate; tolidine diisocyanate; diphenyl methylmethane diisocyanate; tetra alkyl diphenyl methane diisocyanate; 4,4'-dibenzyl diisocyanate; and 1,3-phenylene diisocyanate.

Triisocyanate compounds such as: lysine ester triisocyanate; triphenyl methane triisocyanate; 1,6,11-undecane triisocyanate; 1,8-isocyanate-4,4-isocyanate methyloctane; 1,3,6-hexamethylene triisocyanate; bicycloheptane triisocyanate; an adduct of trimethylol propane and 2,4-toluylene diisocyanate; and an adduct of trimethylol propane and 1,6-hexamethylene diisocyanate.

Polyisocyanate compounds that are complexes of the abovementioned aliphatic and aromatic diisocyanate compounds, and the abovementioned triisocyanate compounds.

Modified polyisocyanate compounds obtained by reacting the abovementioned polyisocyanate compounds with a polyvalent alcohol such as trimethylol propane, glycerol, and pentaerythritol.

And water-dispersible modified polyisocyanate compounds in which nonionic hydrophilic groups from polyethylene glycol or the like have been introduced into an abovementioned polyisocyanate compound.

Commercial products may be used as these polyisocyanate compounds; as a water-dispersible modified isocyanate compound "Yodosol YL2" (product name), manufactured by Nippon NSC Ltd., would be illustrative for example.

These polyisocyanate compounds may be utilized singly or in combination; but the water-dispersible modified polyisocyanate compounds in particular are suited to utilization as the polyisocyanate compound included in the *hardener.*

"Water-dispersible modified polyisocyanate compounds" mean polyisocyanate compounds into which nonionic hydrophilic groups from polyethylene glycol or the like have been introduced; illustrative, for example, would be: the abovementioned "Yodosol YL2" (product name), manufactured by Nippon NSC Ltd.; "SBU-isocyanate O772" (product name), manufactured by Sumika-Bayer Urethane Co.; and "AQUANATE 100," "AQUANATE 110," "AQUANATE 200," and "AQUANATE 210" (product names), manufactured by Nippon Polyurethane Industry Co., Ltd.

The blending proportions of the main ingredient and hardener for the adhesive composition in the present invention are preferably 100 parts by weight of the main ingredient in solid portion, and 0.5 to 30 parts by weight of the hardener in solid portion; 3 to 30 parts by weight of the hardener in solid portion is more preferable; and 5 to 20 parts by weight of the hardener in solid portion is especially preferable.

It should be understood that "solid portion" in the present invention means, as described earlier, the part excepting the solvent (medium). Accordingly, although "solid portion" is stated, "solid portion" does not necessarily signify being in solid form at ordinary temperature and ordinary pressure, but includes forms such as liquid form, and forms that are mixtures of liquids and solids.

If the solid portion of the hardener per 100 parts by weight of the main ingredient in solid portion is less than 0.5 parts by weight, then improvement in adhesive performance (adhesion, heat and hot-water resistance) owing to the formation of crosslink structures is liable to be inadequate. On the other hand, if the solid portion of the hardener per 100 parts by weight of the main ingredient in solid portion exceeds 30 parts by weight, then the useable period (pot life) after the main ingredient and the hardener have been mixed shortens, and the workability is liable to deteriorate.

Furthermore, the ratio of the number hydroxyl groups in the polyol for the adhesive composition, to the number of isocyanate groups in the *polyisocyanate compounds* for the hardener, (hydroxyl-group no./isocyanate-group no.) in the present invention is preferably 1 or less.

If the ratio of the number hydroxyl groups in the polyol for the adhesive composition, to the number of isocyanate groups in the *polyisocyanate compounds* for the hardener (hydroxyl-group no./isocyanate-group no.) is greater than 1, then the adhesive performance (adhesion, heat and hot-water resistance) of the adhesive composition deteriorates, and a problem liable to occur is that the polyol will remain within the cured product.

Various additives, such as fillers, extenders, tackifiers, coupling agents, plasticizers, softening agents, surfactants, emulsifiers, colorants, preservatives, rustproofing agents, and defoaming agents may as needed be included in the main ingredient and/or hardener of an adhesive composition having to do with the present invention. Such additives can be employed singly or in combination.

The fillers and extenders are not particularly limited, but the following would for example be illustrative:
calcium carbonates such as calcium carbonate, colloidal calcium carbonate, and surface-treated fine calcium carbonate powder;
silica-based fillers such as talc, clays, mica powder, and silica sand;
inorganic materials such as magnesium carbonate and alumina; and
organic materials such as wood flour, wheat flour, and starch.

These fillers and extenders can be employed singly or in combination.

The tackifiers are not particularly limited, but the following would for example be illustrative:
rosin-based synthetic resins such as polymerized rosin, rosin ester, and hydrogenated rosin;
terpene-based synthetic resins such as terpenic resins and terpene phenol resin;
petroleum resins such as coumarone-indene resin, and C5- and C9-based petroleum resins; and
phenol resins, xylene resins, and ketone resins.

These tackifiers can be employed singly or in combination.

The coupling agents are not particularly limited, but a silane coupling agent, titanium coupling agent, or aluminum coupling agent would for example be illustrative.

These coupling agents can be employed singly or in combination.

An adhesive composition having to do with the present invention, being an aqueous adhesive composition, is a dual-liquid type (or dual-component type) of adhesive composition made by combining a main ingredient in an emulsified state and a hardener (in the present specification, "dual-component type" adhesive compositions also mean cases in which the hardener is not liquid at ordinary temperature and ordinary pressure-for example, cases in which it is a solid, or cases in which it is a mixture of a liquid and a solid). But when the adhesive composition is to be utilized, the main ingredient and the hardener are employed in an appropriate combination. Curing begins by the act of mixing. In a situation in which the time from producing an adhesive composition having to do with the present invention until utilization is short, a single-liquid-type adhesive composition rendered by mixing a main ingredient and hardener can thereafter be utilized in the interval until it cures.

For an adhesive composition having to do with the present invention, being an waterbome adhesive composition, an aqueous medium is employed as the solvent (or medium). "Aqueous medium" means general water, for example, distilled water, ionexchange water, and purified water, etc. The aqueous medium may as needed include an organic solvent; but the amount and kind of the organic solvent are limited to the permissible extent to which they have an impact (a problematic impact on the environment, for example) on the adhesive-composition properties that are an object of the present invention.

While "emulsified state" in the present specification means a composition in which the form is a resin dispersed (or suspended) in a aqueous medium, it is sufficient that at least a portion of the resin is dissolved in a aqueous medium.

After its main ingredient and hardener are mixed, an adhesive composition by the present invention is employed by spreading it onto a substrate or the like.

A device for coating on an adhesive composition having to do with the present invention may be appropriately chosen taking such factors as the application and operability into consideration; and although the device is not particularly limited, a variety of spreaders, such as roll spreaders (roll coaters), flow coaters, knife coaters, spray-coating machines, notched spreaders, and brushes would for example be illustrative.

An adhesive composition having to do with the present invention can be suitably utilized for applications mainly in "decorative laminates" and like construction materials (applications in building and furniture materials for example), but the uses are not limited to these; the adhesive composition can be utilized in applications in which an adhesive composition composed of a main ingredient that includes a polymer emulsion and a hardener that includes a polyisocyanate compound can be put to ordinary use―for carpentry, papering, fabric-covering, and general-purpose applications, for example.

The "decorative laminates" can be constructed utilizing an adhesive composition having to do with the present invention by laminating *decorative sheet* onto the surface of a *substrate.*

The "substrates" are not particularly limited, but for example as substrates the following would be illustrative:
wooden materials such as lauan plywood and like laminated boards, medium-density fiberboard (MDF), particleboard, solid lumber, and wood fiberboard; and
inorganic materials such as cement-board, plasterboard, and aerated lightweight concrete (ALC).

The "decorative sheet" is not particularly limited, but for example as decorative sheet the following would be illustrative:
plastic materials such as solid or semisolid polyvinyl chloride resins, polyolefin resins, and polyester resins;
jointed boards in which the lumber is processed in sheets; and
decorative paper printed with all kinds of decorations.

In manufacturing a decorative laminate, the adhesive composition may be spread onto the substrate side, or may be spread onto the decorative sheet side. The *decorative laminate* produced, inasmuch as it is manufactured utilizing an adhesive composition by the present invention, will exhibit superior adhesion, heat resistance, hot-water resistance, and like properties.

Accordingly, the present invention realizes a method for manufacturing an adhesive composition of the foregoing dual-liquid type (or dual-component type), composed of:
a step of producing a main ingredient in an emulsified state by adding a polyol having two or more hydroxyl groups that can react with isocyanate groups and whose weight-average molecular weight (M_{w}) measured by gel permeation chromatography (GPC) is 400 to 8000, to a main ingredient that includes a polymer emulsion; and
a step of preparing a hardener that contains a polyisocyanate compound.

Furthermore, the present invention realizes a method for manufacturing an adhesive composition of the foregoing mono-liquid type (or mono-component type), composed of:
a step of producing a main ingredient in an emulsified state by adding a polyol having two or more hydroxyl groups that can react with isocyanate groups and whose weight-average molecular weight (M_{w}) measured by gel permeation chromatography (GPC) is 400 to 8000, to a main ingredient that includes a polymer emulsion;
a step of preparing a hardener that contains a polyisocyanate compound; and
a step of mixing the main ingredient and the hardener.

It should be understood that methods of mixing the main ingredient and hardener are methods that ordinarily are employed in order to mix together the main ingredient and hardener of an adhesive composition; insofar as the mixing methods enable an adhesive composition having to do with the present invention to be produced, they are not particularly limited.

### Embodiments

Although the present invention will be explained below in more specific, detailed terms by means of embodying and comparative examples, the embodiments and comparative examples are no more than a single mode of the present invention; the present invention is not in any way limited by these examples.

It should be understood that in the description of the embodiments, unless expressly stated, the measure for a component (also referred to as "solid portion") that does not include an abovementioned solvent is parts by weight or weight %.

The materials utilized in order to manufacture the adhesive compositions of the embodiments and comparative examples are collectively set forth below.

The following (a1) and (a2) were used as polymer emulsions:
(a1) an ethylene-vinyl acetate copolymer emulsion ["Denka EVA-Tex #81" (product name; 56 weight % solid-portion concentration, pH 4.5-6.0), manufactured by Denki Kagaku Kogyo Co.]; and
(a2) a styrene-butadiene copolymer latex ["Nipol LX 426" (product name; 50 weight % solid-portion concentration, pH 8.5), manufactured by Nippon Zeon Corp.].

The following (b1) was used as an isocyanate compound:
(b1) a water-dispersible isocyanate compound ["Yodosol YL2" (product name; 100 weight % solid-portion), manufactured by Nippon NSC Ltd.].

The following (c1) through (c4) were used as polyols:
(c1) a polyester polyol ["Polylite ODX 2376" (product name; hydroxyl value 107 to 118 mg KOH/g, weight-average molecular weight 1000), manufactured by Dainippon Ink and Chemicals, Inc.];
(c2) a polyether-based polyol ["Actcall 4000" (product name; weight-average molecular weight 4000), which is a polypropylene glycol, manufactured by Mitsui Takeda Chemicals, Inc.];
(c3) a polyolic xylene resin ["Nicanol K100" (product name; hydroxyl value 110 mg KOH/g, weight-average molecular weight 500), manufactured by Mitsubishi Gas Chemical Co., Inc.]; and
(c4) a polyether polyol ["Hiprox BG 2000" (product name; hydroxyl value 56 mg KOH/g, weight-average molecular weight 2000), which is a polybutylene glycol, manufactured by Dainippon Ink and Chemicals, Inc.].

The following (x1) through (x3) were used as other materials:
(x1) a polyvinyl alcohol ["Shin-Etsu Poval PA-33GP" (product name; purity 94 weight % or more, saponification 88 mol %, weight-average molecular weight 300,000), manufactured by Shin-Etsu Chemical Co., Ltd.] in a 10 weight % aqueous solution;
(x2) anionic urethane resin emulsion ["Hydran HW 375" (product name; 38 weight % solid-portion concentration, pH 7.5 to 8.8), manufactured by Dainippon Ink and Chemicals, Inc.]; and
(x3) toluene.

It should be understood that the weight-average molecular weights of the polyols (c1) through (c4) and the polyvinyl alcohol (x1) are polystyrene-converted weight-average molecular weights, measured employing the GPC device and measurement method as noted earlier.

### Embodiment 1

A main ingredient was obtained by stirring/mixing together, at the blend proportions set forth in Table 1, the (a1) ethylene-vinyl acetate copolymer emulsion ["Denka EVA-Tex #81" (product name; 56 weight % solid-portion concentration, pH 4.5-6.0), manufactured by Denki Kagaku Kogyo Co.] as a polymer emulsion, and the (c1) polyester polyol ["Polylite ODX 2376" (product name; hydroxyl value 107 to 118 mg KOH/g, weight-average molecular weight 1000), manufactured by Dainippon Ink and Chemicals, Inc.] as a polyol. The (b1) water-dispersible isocyanate compound ["Yodosol YL2" (product name; 100 weight % solid-portion), manufactured by Nippon NSC Ltd.] was utilized as a hardener. The adhesive composition produced by stirring/mixing together, at the blend proportions set forth in Table 1, the main ingredient and the hardener was put through an evaluation.

### Embodiment 2

A main ingredient was obtained by stirring/mixing together, at the blend proportions set forth in Table 1, the (a2) styrene-butadiene copolymer latex ["Nipol LX 426" (product name; 50 weight % solid-portion concentration, pH 8.5), manufactured by Nippon Zeon Corp.] as a polymer emulsion, and (c1) "Polylite ODX 2376" (product name) mentioned above as a polyol. As a hardener (b1) "Yodosol YL2" (product name) was utilized. The adhesive composition produced by stirring/mixing together, at the blend proportions set forth in Table 1, the main ingredient and the hardener was put through an evaluation.

### Embodiment 3

Utilizing abovementioned (a1) "Denka EVA-Tex #81" as the polymer emulsion, and the (c2) polyether-based polyol that is a polypropylene glycol ["Actcall 4000" (product name; weight-average molecular weight 4000), manufactured by Mitsui Takeda Chemicals, Inc.] as a polyol, a main ingredient was obtained by stirring/mixing each of these together, at the blend proportions set forth in Table 1. As a hardener (b1) "Yodosol YL2" was utilized. The adhesive composition produced by stirring/mixing together, at the blend proportions set forth in Table 1, the main ingredient and the hardener was put through an evaluation.

### Embodiment 4

Utilizing (a1) "Denka EVA-Tex #81" as a polymer emulsion, and the (c3) polyolic xylene resin ["Nicanol K100" (product name; hydroxyl value 110 mg KOH/g, weight-average molecular weight 500), manufactured by Mitsubishi Gas Chemical Co., Inc.] as a polyol, a main ingredient was obtained by stirring/mixing each of these together, at the blend proportions set forth in Table 1. As a hardener (b1) "Yodosol YL2" was utilized. The adhesive composition produced by stirring/mixing together, at the blend proportions set forth in Table 1, the main ingredient and the hardener was put through an evaluation.

### Embodiment 5

Utilizing (a1) "Denka EVA-Tex #81" as a polymer emulsion, and the (c4) polyether polyol ["Hiprox BG 2000" (product name), a polybutylene glycol, (hydroxyl value 56 mg KOH/g, weight-average molecular weight 2000), manufactured by Dainippon Ink and Chemicals, Inc.] as a polyol, a main ingredient was obtained by stirring/mixing each of these together at the blend proportions set forth in Table 1. As a hardener (b1) "Yodosol YL2" was utilized. The adhesive composition produced by stirring/mixing together, at the blend proportions set forth in Table 1, the main ingredient and the hardener was put through an evaluation.

### Comparative Example 1

As a main ingredient (a1) "Denka EVA-Tex #81" was used; as a hardener (b1) "Yodosol YL2" was. The adhesive composition produced by stirring/mixing together, at the blend proportions set forth in Table 2, the main ingredient and the hardener was put through an evaluation.

### Comparative Example 2

As a main ingredient (a2) "Nipol LX 426" was used; as a hardener (b1) "Yodosol YL2" was. The adhesive composition produced by stirring/mixing together, at the blend proportions set forth in Table 2, the main ingredient and the hardener was put through an evaluation.

### Comparative Example 3

Using as a polymer emulsion (a1) "Denka EVA-Tex #81," and as another ingredient the (x1) polyvinyl alcohol ["Shin-Etsu Poval PA-33GP" (product name; purity 94 weight % or more, saponification 88 mol %, weight-average molecular weight 300,000), manufactured by Shin-Etsu Chemical Co., Ltd.] in a 10 weight % aqueous solution, a main ingredient was obtained by stirring/mixing them together at the blend proportions set forth in Table 2. As a hardener (b1) "Yodosol YL2" was used. The adhesive composition produced by stirring/mixing together, at the blend proportions set forth in Table 2, the main ingredient and the hardener was put through an evaluation.

### Comparative Example 4

As a polymer emulsion (a1) "Denka EVA-Tex #81" was used, to which triethylamine was added to adjust the pH to 8.0; then, using the (x2) anionic urethane resin emulsion ["Hydran HW 375" (product name; 38 weight % solid-portion concentration, pH 7.5 to 8.8), manufactured by Dainippon Ink and Chemicals, Inc.], a main ingredient was obtained by stirring/mixing each of these together at the blend proportions set forth in Table 2. As the hardener (b1) "Yodosol YL2" was used. The adhesive composition produced by stirring/mixing together, at the blend proportions set forth in Table 2, the main ingredient and hardener was put through an evaluation.

### Comparative Example 5

(a1) "Denka EVA-Tex #81," used as a polymer emulsion, and (x3) toluene as an organic solvent, were stirred/mixed together at the blend proportions set forth in Table 2. Then after adding triethylamine to adjust the pH to 8.0, using the (x2) anionic urethane resin emulsion ["Hydran HW 375" (product name; 38 weight % solid-portion concentration, pH 7.5 to 8.8), manufactured by Dainippon Ink and Chemicals, Inc.], a main ingredient was obtained by stirring/mixing at the blend proportions set forth in Table 2. As the hardener (b1) "Yodosol YL2" was used. The adhesive composition produced by stirring/mixing together, at the blend proportions set forth in Table 2, the main ingredient and hardener was put through an evaluation.

### Comparative Example 6

Using (a1) "Denka EVA-Tex #81" as a polymer emulsion, and (x3) toluene as an organic solvent, a main ingredient was obtained by stirring/mixing them together at the blend proportions set forth in Table 2. (b1) "Yodosol YL2" was used as a hardener. The adhesive composition produced by stirring/mixing together, at the blend proportions set forth in Table 2, the main ingredient and the hardener was put through an evaluation.

### Adhesive Composition Evaluation

### Adhesive Composition Vis-à-Vis Environmental Problems

Cases in which the adhesive composition did not contain the organic solvent toluene were given a "good"; cases in which toluene was contained were given a "poor"

### Fabrication of Specimens A

Specimens *A* were produced by spreading the above-described adhesive compositions uniformly―so that the amount of adhesive composition spread would be approximately 50 g/m² in solid portion―onto the backside of decorative sheet made of polyvinyl-chloride which was pasted in place onto medium-density fiberboard (MDF) using a rubber roller, and then curing for 3 days at room temperature.

### Adhesion (Normal Peeling)

Evaluation of adhesion was carried out by rating normal peeling as follows. The decorative sheet of polyvinyl-chloride was forcibly peeled off from the MDFs in Specimens *A* after having been cured for 3 days at room temperature, and the post-peeling condition was observed visually. The adhesion in cases in which damage to the MDF arose was given a "good"; the adhesion in cases in which there was peeling along the interface between the decorative sheet of polyvinyl-chloride and the MDF was given a "poor" Peeling along the interface between the MDF and the decorative sheet of polyvinyl-chloride was not observed if the bonding power between the two was sufficient, since damage to the MDF was observed.

### Adhesion (Low-Temperature Peeling)

Evaluation of adhesion was carried out by rating low-temperature peeling as follows. Specimens *A* after having been cured for 3 days at room temperature were stored for 24 hours under a 0°C atmosphere, and thereafter, continuing still at 0°C, the decorative sheet of polyvinyl-chloride was forcibly peeled off from the MDFs and the post-peeling condition was observed visually. The results were rated in the same way the adhesion for normal peeling was.

### Fabrication of Specimens B

Specimens *B* were produced by spreading the above-described adhesive compositions uniformly―so that the amount of adhesive composition spread would be approximately 50 g/m² in solid portion―onto the backside of decorative sheet made of a polyolefin which was pasted in place onto MDF using a rubber roller, and then curing for 3 days at room temperature.

### Heat Resistance (Thermal Creep-Resistance Test)

To evaluate heat resistance, ratings were made by conducting a thermal creep-resistance test as follows. A Specimen *B* was cut into a size 25 mm in width and 150 mm in length, and then 50 mm of the polyolefin decorative sheet was peeled off from the Specimen *B.* The peeled-off polyolefin decorative sheet was stretched in a direction 90° with respect to the Specimen B, a 500 g deadweight was placed on the polyolefin decorative sheet and it was kept for 1 hour under a 60°C atmosphere. Then the polyolefin decorative sheet was rated by measuring, in mm units, length further peeled off from the Specimen *B*. The shorter the peeled-off length, the better; 0.0 mm was particularly outstanding.

### Hot-Water Resistance: JAS Type-2 Immersion Delamination Test for Specialty Plywood

Evaluations of hot-water resistance were made according to the JAS (Japanese Agricultural Standard) Type-2 Immersion Delamination Test as follows. Four squares 75 mm a side were cut out from a Specimen B, immersed in 70°C hot water for 2 hours, and then dried at 60 °C for 3 hours. If the length of the part that did not peel off was 50 mm or more along whichever of the sides (the four sides together), of a single sample, then it was given a "good"; it was given a "poor" if the length of the part that did not peel off was less than 50 mm along any one of the sides.

### Initial Adhesion (Adhesion)

The above-described adhesive compositions were spread uniformly―so that the amount of adhesive composition spread would be approximately 50 g/m² in solid portion―onto the backside of decorative sheet made of a polyolefin, which after drying for 10 seconds at 40°C was pasted in place onto MDF using a rubber roller. The bonding condition between the polyolefin decorative sheet and the MDF immediately thereafter was observed by sight. Cases in which the polyolefin decorative sheet adhered to the MDF without lifting off were given a "good"; cases in which lifting off of the polyolefin decorative sheet from the MDF was observed were given a "poor"

**Table 1**

| Material | Embodiment | | | | |
|---|---|---|---|---|---|
| | 1 | 2 | 3 | 4 | 5 |
| (a1) | 100.0 | | 100.0 | 100.0 | 100.0 |
| (a2) | | 100.0 | | | |
| (b1) | 18.6 | 18.6 | 18.6 | 18.6 | 18.6 |
| (c1) | 20.0 | 20.0 | | | |
| (c2) | | | 20.0 | | |
| (c3) | | | | 20.0 | |
| (c4) | | | | | 20.0 |
| (x1) | | | | | |
| (x2) | | | | | |
| (x3) | | | | | |
| Environmental Impact | good | good | good | good | good |
| Adhesion (Ordinary-State) | good | good | good | good | good |
| Adhesion (Low-Temp.) Temp.) | good | good | good | good | Good |
| Heat Resistance ^{a)} | 0.0 | 0.0 | 0.0 | 0.0 | 0.0 |
| Hot-Water Resistance | good | good | good | good | good |
| Initial Adhesion | good | good | good | good | good |

| | | | | | |
|---|---|---|---|---|---|
| a) Units: mm. | | | | | |

**Table 2**

| Material | Comparative Example | | | | | |
|---|---|---|---|---|---|---|
| | 1 | 2 | 3 | 4 | 5 | 6 |
| (a1) | 100.0 | | 100.0 | 100.0 | 100.0 | 100.0 |
| (a2) | | 100.0 | | | | |
| (b1) | 10.0 | 10.0 | 18.6 | 10.0 | 10.0 | 10.0 |
| (c1) | | | | | | |
| (c2) | | | | | | |
| (c3) | | | | | | |
| (c4) | | | | | | |
| (x1) | | | 20.0 | | | |
| (x2) | | | | 20.0 | 20.0 | |
| (x3) | | | | | 20.0 | 20.0 |
| Environmental Impact | good | good | good | good | poor | poor |
| Adhesion (Ordinary-State) | good | poor | poor | good | good | good |
| Adhesion (Low-Temp.) Temp.) | poor | poor | poor | poor | good | good |
| Heat Resistance ^{a)} | 15.0 | 0.0 | 2.0 | 10.0 | 40.0 | 50.0 |
| Hot-Water Resistance | good | good | poor | good | good | good |
| Initial Adhesion | poor | poor | poor | poor | good | good |

| | | | | | | |
|---|---|---|---|---|---|---|
| a) Units: mm. | | | | | | |

As is clear from Table 1, the adhesive composition of Embodiments 1 through 5 yielded favorable results in terms of environmental impact, adhesion (ordinary peeling), adhesion (low-temperature peeling), heat resistance, hot-water resistance, and initial adhesion. Inasmuch as the adhesive compositions of Embodiments 1-5 do not contain organic solvents or plasticizers―the main ingredient containing a polymer emulsion and a specific polyol, with the polyol coexisting with the polymer emulsion―and the polyol is preferably admixed into the polymer, mixing the hardener including an isocyanate compound with the main ingredient to react the polyol with the isocyanate compound creates a urethane resin; and it appears that the performance of the adhesive composition is enhanced by the creation of the urethane resin.

In contrast, the adhesive compositions of Comparative Examples 1 through 6 yielded inadequate results in terms of the foregoing evaluations.

Polyol was not added to Comparative Examples 1 and 2, both whose adhesion (low-temperature peeling) and initial adhesion were therefore inadequate.

While polyvinyl alcohol was not added to Comparative Example 3, because its weight-average molecular weight was 300,000 the polyvinyl alcohol did not come under the "polyols" having to do with the present invention, and the adhesion, hot-water resistance and initial adhesion with respect to the decorative sheet were inadequate.

With Comparative Examples 4 and 5, urethane resin was not created by the mixing of the main ingredient and hardener; rather, urethane resin emulsion was from the start mixed with ethylene-vinyl acetate emulsion. Consequently, with Comparative Example 4 the adhesion (low-temperature peeling), heat resistance, and initial adhesion with respect to the decorative sheet was inadequate; while with Comparative Example 5 the heat resistance was inadequate, and meanwhile inasmuch as the example used toluene, the environmental impact was unacceptable.

It will be appreciated that since Comparative Example 6 employed the organic solvent toluene, it was unacceptable in terms of environmental impact and heat resistance.

An adhesive composition having to do with the present invention is composed of a main ingredient in an emulsified state, constituted from a polymer emulsion that contains a polyol having two or more hydroxyl groups that can react with isocyanate groups, and of a hardener that contains a polyisocyanate compound. In the adhesive composition the weight-average molecular weight (Mw) measured by gel permeation chromatography (GPC) of the just-noted polyol is 400 to 8000, which makes possible the realization of an adhesive composition with regard to which environmental problems and impact on the human body are taken into consideration, and in which at least one characteristic selected from storage stability, adhesiveness, adhesion, heat resistance, hot-water resistance, and desiccative properties―with respect to various substrates―is enhanced compared to conventional adhesive compositions.

Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

## Claims

1. An adhesive composition comprising:
a main ingredient in an emulsified state, constituted from a polymer emulsion containing a polyol whose weight-average molecular weight (Mw) measured by gel permeation chromatography (GPC) is 400 to 8000 and having two or more hydroxyl groups that can react with isocyanate groups; and
a hardener containing a polyisocyanate compound.

2. An adhesive composition as set forth in claim 1, wherein said polymer emulsion is at least one type of emulsion selected from ethylene-vinyl acetate copolymer emulsions, synthetic rubber emulsions, and acrylic resin emulsions.

3. An adhesive composition as set forth in claim 2, wherein:
said ethylene-vinyl acetate copolymer emulsion is at least one type of emulsion selected from the group consisting of ethylene-vinyl acetate copolymer emulsions, ethylene-vinyl acetate-vinyl chloride copolymer emulsions, and ethylene-vinyl acetate-acryl copolymer emulsions;
said synthetic rubber emulsion is at least one type of emulsion selected from the group consisting of styrene-butadiene copolymer emulsions, polybutadiene emulsions, butadiene-acrylonitrile copolymer emulsions, butadiene-methyl methacrylate copolymer emulsions, butadiene-styrene-vinyl pyridine copolymer emulsions, polychloroprene emulsions, and polyisoprene emulsions; and
said acrylic resin emulsion is at least one type of emulsion selected from
emulsions of acrylic resins in which at least one monomer selected from acrylate, methacrylate, acrylate ester, methacrylate ester, acrylonitrile, acyrlamide, and functional methacrylate ester, is polymerized, and
emulsions of acrylic resins in which said at least one monomer and styrene are copolymerized.

4. An adhesive composition as set forth in any of claims 1 through 3, wherein said polyol is at least one selected from polyester polyols, polyolefin-based polyols, polyolic xylene resins, polybutadiene-based polyols, polyether polyols, acrylic polyols, and castor-oil derivatives.

5. An adhesive composition as set forth in claim 4, wherein the weight-average molecular weight of said polyester polyols is 500 to 6000; the weight-average molecular weight of said polyolefin-based polyols is 500 to 6000; the weight-average molecular weight of said polyolic xylene resins is 400 to 2000; the weight-average molecular weight of said polybutadiene-based polyols is 1000 to 6000; the weight-average molecular weight of said polyether polyols is 400 to 8000; the weight-average molecular weight of said acrylic polyols is 500 to 6000; and the weight-average molecular weight of said castor-oil derivatives is 500 to 6000.

6. An adhesive composition as set forth in any of claims 1 through 5, wherein:
said polymer emulsion is an ethylene-vinyl acetate copolymer resin emulsion and/or a synthetic rubber emulsion; and
said polyol is a polyester polyol whose weight-average molecular weight is 500 to 6000.

7. An adhesive composition as set forth in any of claims 1 through 5, wherein:
said polymer emulsion is an ethylene-vinyl acetate copolymer resin emulsion; and
said polyol is a polyolic xylene resin whose weight-average molecular weight is 400 to 2000.

8. An adhesive composition as set forth in any of claims 1 through 5, wherein:
said polymer emulsion is an ethylene-vinyl acetate copolymer resin emulsion; and
said polyol is a polyether polyol whose weight-average molecular weight is 400 to 8000.
